# DEMANDE DE BREVET EUROPEEN

(11) **EP 0 694 459 A1**
(43) Date de publication de la demande: **31.01.1996**
(21) Numéro de dépôt: 95111408.1
(22) Date de dépôt: 20.07.1995
(51) Int. Cl.: B60S 1/40

(54) **Dispositif pour l'accrochage d'un balai d'essuie-glace sur un bras d'essuie-glace**

(30) Priorité: 26.07.1994 FR 9409333
(71) Demandeur: VALEO SYSTEMES D'ESSUYAGE, F-78321 La Verriere (FR)
(72) Inventeur: Jarasson, Jean-Michel, F-93130 Noisy le Sec (FR)
(74) Mandataire: Gamonal, Didier

(57) **Abrégé**

L'invention propose un dispositif pour l'accrochage d'un balai d'essuie-glace (10) sur un bras d'essuie-glace (22) du tyupe comportant une pièce de montage (34) reçue entre deux ailes latérales parallèles (12) du balai d'essuie-glace (10) et qui comporte deux joues longitudinales parallèles (38) qui délimitent une ouverture supérieure oblongue pour l'introduction en vue de son accrochage de l'extrémité en forme de crochet (18) du bras d'essuie-glace (22) sur une pièce d'articulation (36), et du type comportant un capot (60) d'obturation de l'ouverture après l'accrochage du bras d'essuie-glace (10), caractérisé en ce que le capot (60) est fixé de manière amovible sur la pièce de montage (34).

## Description

La présente invention concerne un dispositif pour l'accrochage d'un balai d'essuie-glace sur un bras d'essuie-glace.

Le dispositif d'accrochage du balai d'essuie-glace sur la portion d'extrémité du bras d'entraînement du balai d'essuie-glace a pour fonction d'assurer la liaison entre ces deux éléments en permettant l'articulation du balai d'essuie-glace autour d'un axe de palier d'articulation qui s'étend selon une direction généralement perpendiculaire à la direction longitudinale du balai d'essuie-glace.

Le document FR-A-2.659.613 décrit un dispositif d'accrochage du type comportant une pièce de montage reçue entre deux ailes latérales parallèles du balai d'essuie-glace et qui comporte deux joues longitudinales parallèles qui délimitent une ouverture supérieure oblongue pour l'introduction, en vue de son accrochage, de l'extrémité en forme de crochet du balai d'essuie-glace sur une pièce d'articulation, et du type comportant un capot d'obturation de l'ouverture après l'accrochage du balai d'essuie-glace.

Dans ce document, la partie constituant la pièce de montage et la partie constituant la pièce d'articulation sont réalisées en une seule pièce ainsi que le capot d'obturation de l'ouverture qui est réalisé venu de matière avec la pièce de montage à laquelle il est relié par un film de matière plastique aminci constituant une charnière d'articulation du capot par rapport à la pièce de montage.

Cette conception est peu satisfaisante dans la mesure où la réalisation en une seule pièce du capot de fermeture ne permet pas de conférer à celui-ci des formes complexes visant notamment à améliorer l'esthétique de l'ensemble de l'essuie-glace.

De plus, la fragilité de la charnière est telle qu'elle limite le nombre possible d'opérations d'ouverture, puis de fermeture à nouveau, du capot, notamment en vue du remplacement du balai d'essuie-glace.

La présente invention a pour but de proposer une nouvelle conception d'un dispositif d'accrochage du type mentionné précédemment qui remédie à ces inconvénients.

Dans ce but, l'invention propose un dispositif caractérisé en ce que le capot est fixé de manière amovible sur la pièce de montage.

Selon d'autres caractéristiques de l'invention :
- le capot comporte des moyens de fixation par emboîtement élastique ;
- la face inférieure du capot comporte une pince déformable élastiquement qui coopère avec une tige transversale de la pièce de montage ;
- les bords longitudinaux du capot sont reçus entre les faces internes en vis-à-vis des joues de la pièce de montage et une portion de la face inférieure du capot prend appui sur une traverse de la pièce de montage ;
- la face inférieure du capot prend appui sur les bords supérieurs longitudinaux des joues de la pièce de montage et/ou sur les bords supérieurs longitudinaux des ailes du balai d'essuie-glace ;
- la pièce de montage est reçue dans une ouverture formée dans un dos supérieur transversal du balai d'essuie-glace qui relie les ailes latérales, et la pièce de montage comporte des moyens pour sa fixation dans l'ouverture ;
- les moyens de fixation de la pièce de montage comportent un bec formé sur une paroi transversale d'extrémité de la pièce qui ensserre un bord transversal de l'ouverture du dos du balai d'essuie-glace ;
- les moyens de fixation de la pièce de montage comportent des plots formés sur les faces internes des ailes du balai d'essuie-glace qui sont reçus dans des trous correspondants des joues de la pièce de montage ;
- la pièce d'articulation est emboîtée sur un axe transversal d'articulation qui s'étend entre les ailes du balai d'essuie-glace ;
- il est prévu des moyens pour limiter l'amplitude du pivotement de la pièce d'articulation par rapport au balai d'essuie-glace ;
- lesdits moyens sont agencés entre des bords latéraux parallèles de la pièce d'articulation et les faces internes des joues de la pièce de montage ;
- lesdits moyens sont agencés entre des bords latéraux parallèles de la pièce d'articulation et les faces internes des ailes de l'essuie-glace ;
- la pièce de montage et la pièce d'articulation sont initialement reliées entre elles par des parties de liaison susceptibles d'être rompues lors du premier pivotement du bras d'essuie-glace accroché sur le balai d'essuie-glace.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée illustrant les principaux composants du dispositif d'accrochage en association avec le balai d'essuie-glace et le bras d'essuie-glace ;
- la figure 2 est une vue en section longitudinale par un plan médian qui illustre une première phase des opérations d'accrochage ; et
- la figure 3 est une vue similaire à celle de la figure 2 qui illustre le bras d'essuie-glace en position accrochée sur le balai d'essuie-glace.

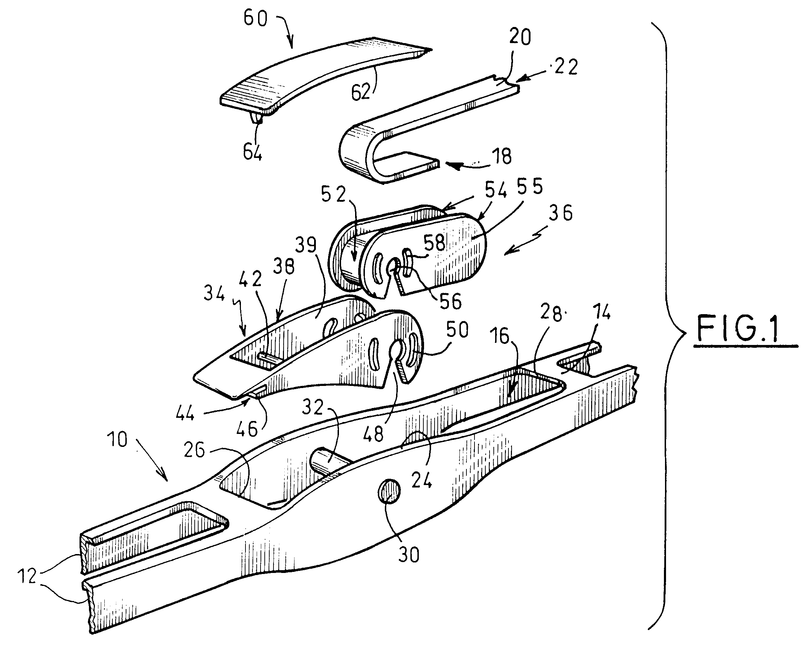

On a représenté à la figure 1 un balai d'essuie-glace 10 qui est pour l'essentiel constitué par deux ailes latérales parallèles 12 qui sont reliées entre elles par un dos transversal supérieur 14 de manière à conférer au balai d'essuie-glace une section transversale en forme générale de U.

Le dos supérieur 14 comporte notamment une ouverture 16 destinée à recevoir des moyens d'accrochage de l'extrémité en forme de crochet 18 de la tige 20 d'un bras d'essuie-glace 22.

A cet effet, l'ouverture 16 est délimitée latéralement par des bords supérieurs longitudinaux 24 des ailes latérales 12 et par deux bords transversaux d'extrémités 26 et 28.

Un axe 30 d'articulation du bras d'essuie-glace 22 sur le balai d'essuie-glace 10 s'étend transversalement entre les faces internes opposées 32 des ailes 12 du balai d'essuie-glace 10, selon une direction perpendiculaire à la direction longitudinale générale du balai d'essuie-glace 10 et du bras d'essuie-glace 22.

Le dispositif pour l'accrochage et l'articulation du bras d'essuie-glace 22 sur l'axe 30 comporte une pièce de montage 34 et une pièce d'articulation 36.

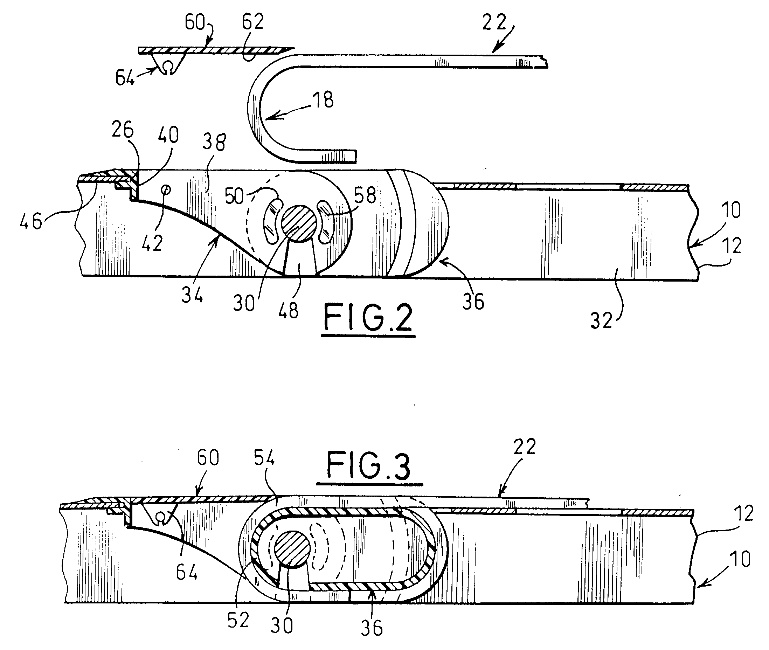

La pièce de montage 34 est pour l'essentiel constituée par deux joues latérales et parallèles 38 qui sont reliées entre elles par une paroi verticale d'extrémité 40 (voir figure 2) qui s'étend transversalement entre les joues 38 et par une tige transversale d'accrochage 42.

Les joues latérales 38 sont prévues pour être reçues entre les faces internes 32 des ailes 12 du balai d'essuie-glace 10.

La partie d'extrémité 44 de la pièce de montage 38 comporte un bec 46 qui, en position montée comme cela est illustré sur les figures 2 et 3, vient enserrer le bord 26 de l'ouverture 16.

La fixation de la pièce de montage 34, outre le bec 46, est également assurée grâce à des fentes débouchantes 48 qui permettent l'emboîtement élastique des joues 38 sur l'axe d'articulation 30.

Enfin, de part et d'autre des fentes 48, chacune des joues latérales 38 comporte une fente en arc de cercle 50 dont la fonction sera explicitée par la suite.

La pièce d'articulation 36 comporte une partie centrale oblongue 52 de forme complémentaire de celle du crochet 18 du bras d'essuie-glace 22 qui est agencée entre deux bords latéraux en forme de parois parallèles 54 qui ont pour fonction de guider latéralement le crochet 18.

Chacun des bords en forme de paroi 54 comporte une fente débouchante 56 qui, comme les fentes 48 des joues 38 de la pièce de montage 34 ont pour fonction de permettre l'emboîtement élastique avec articulation de la pièce d'articulation 36 sur l'axe d'articulation 30.

La largeur transversale de la pièce d'articulation 36 est bien entendu telle qu'elle peut être reçue entre les faces internes en vis-à-vis 39 des joues 38 de la pièce de montage 34.

Chacune des faces latérales externes 56 des parois 54 de la pièce d'articulation 36 comporte deux plots en relief et opposés 58 qui, en position montée, et comme cela est illustré sur la figure 2, sont reçus dans les fentes en arc de cercle 50 de la pièce de montage 34 de manière à limiter les possibilités de pivotement de la pièce d'articulation 36 par rapport à la pièce de montage 34.

Conformément à l'invention, il est enfin prévu un capot 60 destiné à obturer l'ouverture 16 lorsque le bras d'essuie-glace 22 est accroché sur le balai d'essuie-glace 10 comme cela est illustré sur la figure 3.

Dans ce mode de réalisation, le capot 60 se présente sous la forme d'une plaque dont le profil épouse celui des bords supérieurs longitudinaux 24 des ailes 12 du balai d'essuie-glace 10.

En position montée, la face inférieure 62 du capot 60 prend appui sur les bords longitudinaux 64.

Le capot 60 est un organe amovible qui, pour sa fixation indirecte sur le balai d'essuie-glace 10, comporte sur sa face inférieure une pince élastique ouverte 64 qui permet son accrochage par emboîtement élastique sur la tige transversale 42 de la pièce de montage 34.

En se reportant à la figure 2, et après avoir mis en place la pièce de montage 34 et la pièce d'articulation 36 dans le balai d'essuie-glace 10, on constate qu'il est possible, selon une technique connue, d'introduire le crochet 18 du bras d'essuie-glace 22 entre les joues 38 de la pièce de montage 34 puis de venir le mettre en position accrochée sur la pièce d'accrochage 36 comme cela est illustré sur la figure 3.

Il est bien entendu possible de prévoir des moyens (non représentés) pour l'accrochage du crochet 18 sur la pièce d'articulation 36 afin d'éviter tout déboîtement accidentel du crochet 18.

L'opérateur n'a plus ensuite qu'à mettre en position le capot amovible d'obturation 60, comme cela est illustré sur la figure 3, de manière à obturer l'ouverture 16 et à conférer une très bonne esthétique à l'essuie-glace. La forme du capot 60 et de la partie d'extrémité 44 de la pièce de montage 34 sont parfaitement complémentaires de la forme générale de la partie centrale du balai d'essuie-glace servant à l'accrochage du bras d'essuie-glace 22.

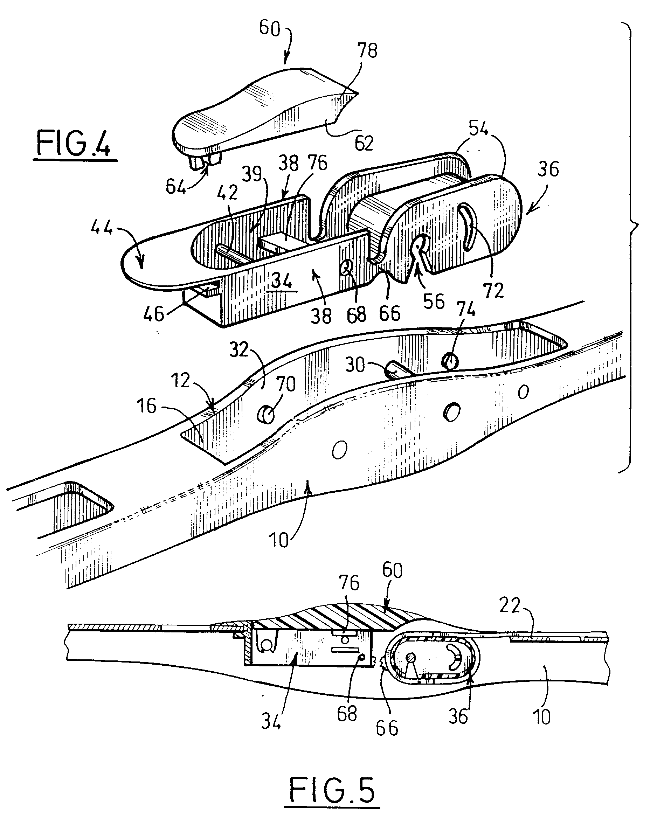

On décrira maintenant le second mode de réalisation illustré aux figures 4 et 5 sur lesquelles des éléments identiques ou similaires à ceux décrits en référence aux figures 1 à 3 sont désignés par les mêmes chiffres de référence.

Comme on peut le voir sur la figure 4, la pièce de montage 34 et la pièce de liaison 36 sont initialement reliées entre elles par des parties amincies 66, susceptibles d'être ultérieurement rompues (voir figure 5) et qui, initialement, relient entre elles les joues 38 et les parois 54.

La fixation de la pièce de montage 38 dans l'ouverture 16 est assurée par le bec 46, mais aussi au moyen de trous 68 formés dans les joues 38 et qui sont destinés à recevoir des plots 70 formés en relief, par crevé, dans les faces internes 32 des ailes 12 du balai d'essuie-glace 10.

Les parois 54 de la pièce d'articulation 36 comportent chacune une rainure 72 qui est prévue pour coopérer avec un plot en relief 74 du balai d'essuie-glace 10 pour limiter les facultés de pivotement de la pièce d'articulation 36 par rapport au balai d'essuie-glace 10.

Le capot 60 d'obturation de l'ouverture 16 prend ici appui par sa face inférieure 62 sur une traverse 76 de la pièce de montage 34 qui s'étend entre les joues 38 de cette dernière.

Le capot comporte également une pince 64 pour sa fixation sur la tige d'accrochage 42.

Dans ce mode de réalisation, les bords longitudinaux parallèles, aux faces latérales 78 du capot 60 sont reçus entre les faces internes en vis-à-vis 39 des joues 38 de la pièce de montage 34.

L'assemblage des composants est identique à celui qui a été décrit en regard aux figures 1 à 3, les parties 66 étant rompues lors du premier mouvement d'articulation du bras d'essuie-glace 22 par rapport au balai 10.

## Revendications

1. Dispositif pour l'accrochage d'un balai d'essuie-glace (10) sur un bras d'essuie-glace (22) du type comportant une pièce de montage (34) reçue entre deux ailes latérales parallèles (12) du balai d'essuie-glace (10) et qui comporte deux joues longitudinales parallèles (38) qui délimitent une ouverture supérieure oblongue pour l'introduction en vue de son accrochage de l'extrémité en forme de crochet (18) du bras d'essuie-glace (22) sur une pièce d'articulation (36), et du type comportant un capot (60) d'obturation de l'ouverture après l'accrochage du bras d'essuie-glace (10), caractérisé en ce que le capot (60) est fixé de manière amovible sur la pièce de montage (34).

2. Dispositif pour l'accrochage selon la revendication 1, caractérisé en ce que le capot (60) comporte des moyens (64, 42) de fixation par emboîtement élastique.

3. Dispositif pour l'accrochage selon la revendication 2, caractérisé en ce que la face inférieure (62) du capot (60) comporte une pince déformable élastiquement (64) qui cooère avec une tige transversale (42) de la pièce de montage (34).

4. Dispositif pour l'accrochage selon l'une quelconque des revendications précédentes, caractérisé en ce que les bords longitudinaux (78) du capot (60) sont reçus entre les faces internes en vis-à-vis (39) des joues (38) de la pièce de montage (34), et en ce qu'une portion de la face inférieure (62) du capot prend appui sur une traverse (76) de la pièce de montage.

5. Dispositif pour l'accrochage selon l'une quelconque des revendications 1 à 3, caractérisé en ce que la face inférieure (62) du capot (60) prend appui sur les bords supérieurs longitudinaux des joues (38) de la pièce de montage (34) et/ou sur les bords supérieurs longitudinaux (64) des ailes (12) du balai d'essuie-glace (10).

6. Dispositif pour l'accrochage selon l'une quelconque des revendications précédentes, caractérisé en ce que la pièce de montage (34) est reçue dans une ouverture (16) formée dans un dos supérieur transversal (14) du balai d'essuie-glace (10) qui relie les ailes latérales (12), et en ce qu'elle comporte des moyens pour sa fixation dans l'ouverture (16).

7. Dispositif pour l'accrochage selon la revendication 6, caractérisé en ce que les moyens de fixation de la pièce de montage (34) comportent un bec (46) formé sur une paroi transversale (42, 44) d'extrémité de la pièce de montage (34) qui enserre un bord transversal (26) de l'ouverture (16) du dos (14) du balai d'essuie-glace (10).

8. Dispositif pour l'accrochage selon l'une des revendications 6 ou 7, caractérisé en ce que les moyens de fixation de la pièce de montage (34) comportent des plots (70) formés sur les faces internes (32) des ailes (12) du balai d'essuie-glace (10) qui sont reçus dans des trous correspondants (68) des joues (38) de la pièce de montage (34).

9. Dispositif pour l'accrochage selon l'une quelconque des revendications précédentes, caractérisé en ce que la pièce d'articulation (36) est emboîtée sur un axe transversal (30) d'articulation qui s'étend entre les ailes (12) du balai d'essuie-glace (10).

10. Dispositif pour l'accrochage selon la revendication 9, caractérisé en ce qu'il est prévu des moyens pour limiter l'amplitude du pivotement de la pièce d'articulation par rapport au balai d'essuie-glace (10).

11. Dispositif pour l'accrochage selon la revendication 10, caractérisé en ce que lesdits moyens (50, 58) sont agencés entre des bords latéraux parallèles (54) de la pièce d'articulation (36) et les faces internes (39) des joues de la pièce de montage (34).

12. Dispositif pour l'accrochage selon la revendication 10, caractérisé en ce que lesdits moyens (72, 74) sont agencés entre des bords latéraux parallèles (54) de la pièce d'articulation (36) et les faces internes (32) des ailes (12) du balai d'essuie-glace (10).

13. Dispositif pour l'accrochage selon l'une quelconque des revendications précédentes, caractérisé en ce que la pièce de montage (34) et la pièce d'articulation (36) sont initialement reliées entre elles par des parties de liaison (66) susceptibles d'être rompues lors du premier pivotement du bras d'essuie-glace accroché sur le balai d'essuie-glace (10).
